# EUROPEAN PATENT APPLICATION

(11) **EP 4 129 834 A1**
(43) Date of publication of application: **08.02.2023**
(21) Application number: 20927123.8
(22) Date of filing: 25.03.2020
(51) Int. Cl.: B64G 1/10, G01S 13/90

(54) **INFORMATION PROCESSING DEVICE, INFORMATION PROCESSING METHOD, AND COMPUTER-READABLE STORAGE MEDIUM**

(71) Applicant: NEC Corporation, 108-8001 Tokyo (JP)
(72) Inventor: OHNO, Shouhei, Tokyo 108-8001 (JP); ISHII, Takakazu, Tokyo 108-8001 (JP); AKAGAWA, Nao, Tokyo 108-8001 (JP); HIRATA, Hiromichi, Tokyo 108-8001 (JP)
(74) Representative: Betten & Resch
(86) International application number: PCT/JP2020/013269
(87) International publication number: WO 2021/192079

(57) **Abstract**

Provided are an information processing device and the like capable of presenting a user-desired observation result to the user rapidly in a case where observation is performed using observation satellites. The information processing device comprises receiving means for receiving a request to acquire observation data based on a result of observing a designated range at a designated time, specifying means for using orbit information for a plurality of observation satellites to specify an observation satellite with which the designated range can be observed on or after the designated time from among the plurality of observation satellites, and acquiring means for acquiring requested observation data, that is, the observation data which is generated by the specified observation satellite and which is based on a result of observing the designated range on or after the designated time.

## Description

### [Technical Field]

The present disclosure relates to a technique for processing data acquired by a radar or a sensor.

### [Background Art]

In order to grasp the situation of the ground surface, there is a technique of observing the ground surface by using an artificial satellite including a radar or a sensor. Hereinafter, the artificial satellite which observes the ground surface is referred to as an "observation satellite".

PTL 1 discloses a technique of synthesizing low-resolution observation images acquired from a plurality of observation satellites, extracting a range requiring detailed analysis from the synthesized images, and performing observation by using an observation satellite capable of performing high-resolution observation in the extracted range.

PTL 2 discloses a technique for causing a collector satellite which observes the ground surface to acquire information on an environment which hinders observation from a connector satellite, and causing the collector satellite to observe the ground surface based on the information on the environment.

### [Citation List]

### [Patent Literature]

[PTL 1] JP 2000-194833 A
[PTL 2] US 2016/0020848 A

### [Summary of Invention]

### [Technical Problem]

When a certain event occurs, such as when a disaster occurs or a suspicious ship is found in the territorial sea, a user may request an observation result of a specific range in which the event occurs in real time. However, since the observation satellite as described above observes while moving on an orbit in the sky, the observation satellite is not necessarily at a position on the orbit where the observation enable the observation of the specific range at the time designated by the user. In such a case, it is conceivable to acquire data based on the observation result from the observation satellite capable of observing the specific range at a time as close as possible to the time designated by the user.

PTL 1 describes that an observation request is made to the observation satellite based on a flight schedule of the observation satellite in such a way that observation can be performed at a date and time close to a date and time for which the observation is desired. However, in the technique described in PTL 1, the observation request based on the flight schedule is made to one predetermined observation satellite, and thus, in some moving schedules of the observation satellite, there is a possibility that the observation satellite performs observation at a timing significantly delayed from the timing for which the user requests the observation.

PTL 2 describes that observation of the ground surface is performed by using a plurality of collector satellites, but does not describe processing in a case where an event has occurred, and an observation result for a range where the event has occurred is requested. In a case where the ground surface is observed by using a plurality of observation satellites, each of the observation satellites continues to observe the ground surface and acquires an enormous amount of observation results. Therefore, in the technique described in PTL 2, there is a possibility that, when an event has occurred, it takes time to present data based on an observation result for a range where the event has occurred to the user.

The present disclosure has been made in view of the above problems, and one of object of the present disclosure is to provide an information processing device or the like capable of rapidly presenting data based on a user-desired observation result to a user in a case where observation is performed using an observation satellite.

### [Solution to Problem]

An information processing device according to one of aspect of the present disclosure includes: a receiving means configured to receive a request to acquire observation data based on a result of observing a designated range at a designated time; a specifying means configured to specify, based on orbit information for a plurality of observation satellites, the observation satellite capable of observing the designated range on or after the designated time from among the plurality of observation satellites; and an acquiring means configured to acquire requested observation data, the required observation data being the observation data based on a result of observing the designated range on or after the designated time, from the specified observation satellite.

An information processing method according to one of aspect of the present disclosure includes: receiving a request to acquire observation data based on a result of observing a designated range at a designated time; specifying, based on orbit information for a plurality of observation satellites, the observation satellite capable of observing the designated range on or after the designated time from among the plurality of observation satellites; and acquiring requested observation data, the required observation data being the observation data based on a result of observing the designated range on or after the designated time, from the specified observation satellite.

A computer-readable storage medium according to one of aspect of the present disclosure stores therein a program causing a computer to execute a process including: receiving a request to acquire observation data based on a result of observing a designated range at a designated time; specifying, based on orbit information for a plurality of observation satellites, the observation satellite capable of observing the designated range on or after the designated time from among the plurality of observation satellites; and acquiring requested observation data, the required observation data being the observation data based on a result of observing the designated range on or after the designated time, from the specified observation satellite.

### [Advantageous Effects of Invention]

According to the present disclosure, in a case where observation is performed using an observation satellite, a user-desired observation result can be rapidly presented to a user.

### [Brief Description of Drawings]

Fig. 1 is a diagram schematically illustrating an example of a configuration of an observation system according to a first example embodiment of the present disclosure.
Fig. 2 is a diagram illustrating an example of an orbit on which an observation satellite according to the first example embodiment of the present disclosure moves.
Fig. 3 is a block diagram illustrating an example of a functional configuration of an information processing device according to the first example embodiment of the present disclosure.
Fig. 4 is a flowchart illustrating an example of an operation of the information processing device according to the first example embodiment of the present disclosure.
Fig. 5 is a block diagram illustrating an example of a functional configuration of an observation system according to a second example embodiment of the present disclosure.
Fig. 6 is a diagram illustrating an example of observation satellite data according to the second example embodiment of the present disclosure.
Fig. 7 is a diagram illustrating an example of an observation database according to the second example embodiment of the present disclosure.
Fig. 8 is a sequence diagram illustrating an example of an operation of an observation system according to the second example embodiment of the present disclosure when an observation request is not received.
Fig. 9 is a sequence diagram illustrating an example of an operation of the observation system according to the second example embodiment of the present disclosure when the observation request is received.
Fig. 10 is a block diagram illustrating an example of a functional configuration of an observation system according to a third example embodiment of the present disclosure.
Fig. 11 is a sequence diagram illustrating an example of an operation of the observation system according to the third example embodiment of the present disclosure.
Fig. 12 is a block diagram illustrating an example of a functional configuration of an observation system according to a fourth example embodiment of the present disclosure.
Fig. 13 is a sequence diagram illustrating an example of an operation of the observation system according to the fourth example embodiment of the present disclosure.
Fig. 14 is a flowchart illustrating an example of a synthesis process according to the fourth example embodiment of the present disclosure.
Fig. 15 is a block diagram illustrating an example of a functional configuration of an observation system according to a fifth example embodiment of the present disclosure.
Fig. 16 is a block diagram illustrating an example of a hardware configuration of a computer device which achieves the information processing devices according to the first, second, third, fourth, and fifth example embodiments of the present disclosure.

### [Example Embodiment]

Hereinafter, example embodiments of the present disclosure will be described with reference to the drawings.

### <First Example Embodiment>

An observation system including an information processing device according to a first example embodiment will be described.

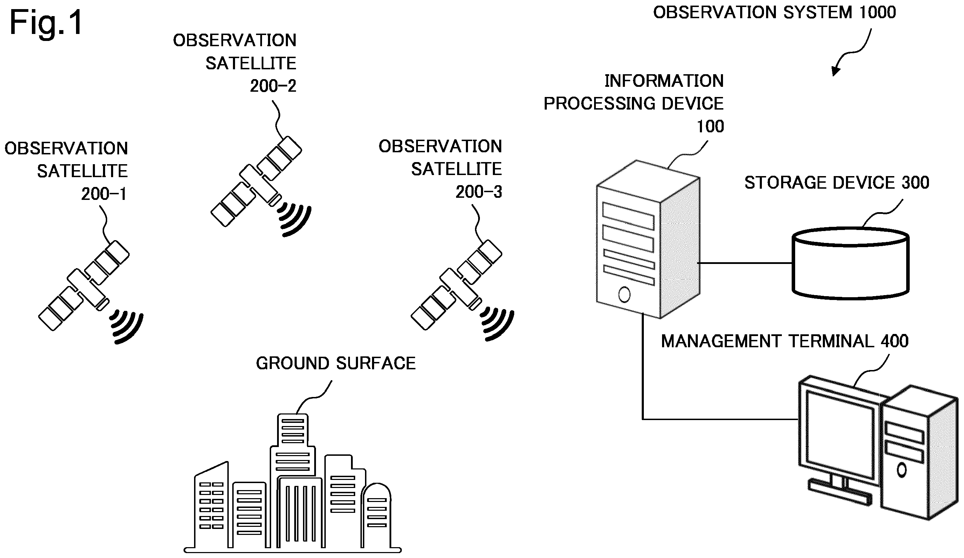

Fig. 1 is a diagram schematically illustrating an example of a configuration of an observation system 1000 according to a first example embodiment. As illustrated in Fig. 1, the observation system 1000 includes an information processing device 100, observation satellites 200-1, 200-2, and 200-3, a storage device 300, and a management terminal 400. The information processing device 100 is communicably connected to the observation satellites 200-1, 200-2, and 200-3, the storage device 300, and the management terminal 400 via a network.

Here, the number of the observation satellites 200-1, 200-2, and 200-3 is not limited to this example. The number of observation satellites may be in a range of 2 < n (n is a natural number). In the present disclosure, when the observation satellites 200-1, 200-2,..., and 200-n are not distinguished from one another, the observation satellites 200-1, 200-2,..., and 200-n are also simply referred to as "observation satellites 200".

In the situation illustrated in Fig. 1, the observation satellites 200-1, 200-2, and 200-3 observe the ground surface as needed while moving on an orbit in the sky. The observation satellites 200-1, 200-2, and 200-3 generate observation data which is data based on a result of observing the ground surface. The information processing device 100 acquires observation data according to a request from the management terminal 400 from at least one of the observation satellites 200-1, 200-2, and 200-3. As described above, the observation system 1000 is a system in which the observation data according to the request from the management terminal 400 in the observation data generated by the observation satellite 200 is acquired in the information processing device 100.

The observation satellite 200 is mounted with a sensor or a radar. For example, the radar mounted on the observation satellite 200 irradiates the ground surface with an electromagnetic wave from the sky, and acquires an electromagnetic wave reflected from the ground surface toward the sensor. A radar which is virtually treated as a radar having a large opening surface in such a manner that the irradiation and acquisition of the electromagnetic wave are repeated while the observation satellite 200 moves on the orbit, and the obtained electromagnetic wave is synthesized is referred to as a synthetic aperture radar (SAR). The observation satellite 200 can acquire information indicating the state and terrain of the ground surface, a distance between the ground surface and the observation satellite 200, and the like by using the sensor or the radar. The sensor or the radar mounted on the observation satellite 200 may be an optical sensor which acquires a reflected wave of sunlight, a thermal infrared sensor which acquires an electromagnetic wave radiated by an object according to a temperature, a lidar which irradiates laser light and acquires a reflected wave of the irradiated laser light, or the like. The sensor or the radar mounted on the observation satellite 200 may be a multi-spectral sensor obtained by combining a plurality of sensors which acquire only electromagnetic waves in a specific wavelength band. The observation satellite 200 may be mounted with a plurality of sensors or radars. Hereinafter, the sensor or the radar mounted on the observation satellite 200 will be simply referred to as a "sensor" without distinction.

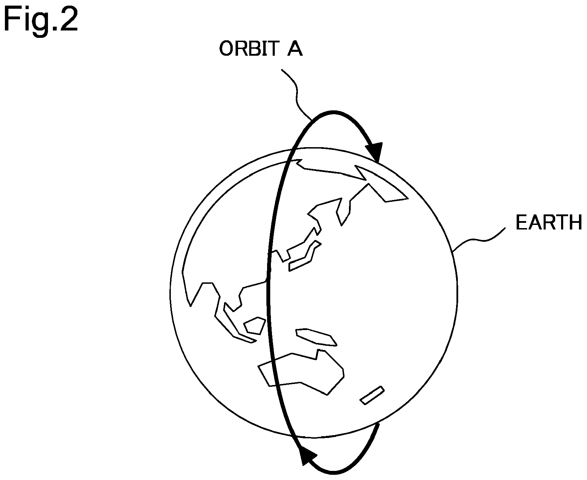

Each of the observation satellites 200 moves on the orbit in the sky. Fig. 2 is an example of the orbit on which the observation satellite 200 moves. The observation satellite 200 moves on an elliptical orbit, for example, as an orbit A illustrated in Fig. 2. At this time, the observation satellite 200 continues to move on the orbit A until a predetermined instruction is given. The orbit on which the observation satellite 200 moves is not limited to this example. For example, the observation satellite 200 may move while shifting the elliptical orbit.

The observation satellite 200 acquires the information on the ground surface while moving on the orbit in the sky by using the sensor mounted on the observation satellite 200. In the present disclosure, a process of the observation satellite 200 acquiring the information of the ground surface by using the sensor is referred to as "observing". A range of the ground surface which the observation satellite 200 can observe at a position on the orbit is also referred to as an "observation range". The observation satellite 200 generates data based on a result of observation using the sensor, and transmits the generated data to the information processing device 100. The data generated at this time may be data indicating a result of the observation of the observation satellite 200, or may be data indicating a result obtained by performing a predetermined process on the result of the observation of the observation satellite 200. The data generated by the observation satellite 200 is referred to as "observation data". The observation data is an image in which the information on the ground surface which the observation satellite 200 acquires using the sensor or information obtained by performing a predetermined process on the information on the ground surface is represented in a two-dimensional map.

The storage device 300 stores information regarding the observation satellites and the observation data generated by each of the observation satellites 200. The information regarding the observation satellites includes orbit information for each of the observation satellites 200. The orbit information includes, for example, an orbit on which each of the observation satellites 200 moves, a position of the observation satellite 200 on the orbit, and information indicating a cycle of the movement on the orbit or a speed of the movement on the orbit. Here, the position of the observation satellite 200 on the orbit is information in which a time and the position of the observation satellite 200 on the orbit at that time are associated with each other. The cycle of the movement on the orbit is a time until the observation satellite 200 moves from a first position on the orbit to a second position on the same orbit. In the orbit A illustrated in Fig. 2, the first position and the second position may be the same position. Hereinafter, the cycle of the movement on the orbit is also simply referred to as a "cycle". The orbit information may be acquired from the observation satellite 200 or may be calculated from parameters obtained from the observation satellite 200 and regarding various orbits. In the present disclosure, it is assumed that the orbit information is given in advance.

The management terminal 400 is a device including an input/output unit for communicating with the information processing device 100. For example, the management terminal 400 may be a personal computer. The management terminal 400 transmits an observation request, which is a request to acquire observation data according to an input from the user, to the information processing device 100. Specifically, the user uses the management terminal 400 to perform an input operation for designating the range of the ground surface and the time. An arbitrary range of the ground surface designated by the user is referred to as a "designated range", and the time designated by the user is referred to as a "designated time". When receiving the designated range and the designated time input from the user, the management terminal 400 transmits an observation request, which is a request to acquire observation data based on a result of observing the designated range on or after the designated time from a plurality of observation satellites 200, to the information processing device 100. At this time, the observation request includes information indicating the designated range and information indicating the designated time.

### [Details of Information Processing Device 100]

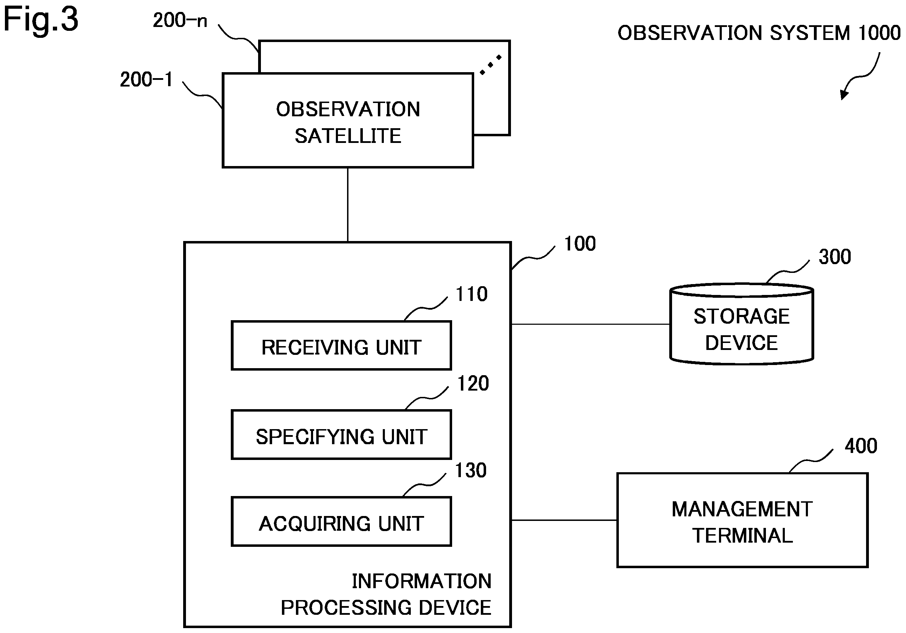

Next, the configuration of the information processing device 100 will be described in detail with reference to Fig. 3. Fig. 3 is a block diagram illustrating an example of a functional configuration of the information processing device 100 according to the first example embodiment. As illustrated in Fig. 3, the information processing device 100 includes a receiving unit 110, a specifying unit 120, and an acquiring unit 130.

The receiving unit 110 receives the observation request from the management terminal 400. Specifically, for example, the receiving unit 110 receives the observation request including the information indicating the designated range and the information indicating the designated time from the management terminal 400. In this manner, the receiving unit 110 receives a request to acquire observation data based on a result of observing the designated range at the designated time. The receiving unit 110 is an example of the receiving means.

The specifying unit 120 specifies the observation satellite 200 in response to the observation request received by the receiving unit 110. Specifically, for example, when the receiving unit 110 receives the observation request, the specifying unit 120 reads the orbit information included in the information regarding the observation satellite from the storage device 300.

Then, based on the orbit information, the specifying unit 120 specifies an observation satellite which arrives on or after the designated time at a position on the orbit enabling the observation of the designated range. First, the specifying unit 120 calculates the position on the orbit enabling each of the observation satellites 200 to observe the designated range. Here, the observation range at the position of each observation satellite 200 on the orbit is determined in advance by the performance of the observation satellite 200, the type and performance of the sensor mounted on the observation satellite 200, and the orbit information. As a result, the specifying unit 120 can calculate the position on the orbit enabling each of the observation satellites 200 to observe the designated range. Then, based on the information indicating the orbit of the observation satellite 200, the information indicating the cycle, and the information indicating the time and the position on the orbit at that time, the specifying unit 120 predicts the time at which each of the observation satellites 200 arrives at the position on the orbit enabling the observation of the designated range. Then, based on the predicted time, the specifying unit 120 specifies the observation satellite which arrives on or after the designated time at the position enabling the observation of the designated range. For example, the specifying unit 120 selects the observation satellite, which arrives on or after the designated time at the position on the orbit enabling the observation of the designated range, from among the observation satellites which arrive at the predicted time at the position on the orbit enabling the observation of the designated range. At this time, the specifying unit 120 may specify the observation satellite which arrives within a predetermined time after the designated time at the position enabling the observation of the designated range, or may specify the observation satellite which arrives on a time closest to the designated time at the position enabling the observation of the designated range. In a case where there is a plurality of observation satellites which arrives on or after the designated time at the position enabling the observation of the designated range, the specifying unit 120 may specify the plurality of observation satellites. In this manner, based on the orbit information for the plurality of observation satellites, the specifying unit 120 specifies the observation satellite capable of observing the designated range on or after the designated time from among the plurality of observation satellites. The specifying unit 120 is an example of the specifying means.

The acquiring unit 130 acquires the observation data generated by the observation satellite 200. Specifically, for example, the observation satellite specified by the specifying unit 120 arrives on or after the designated time at the position on the orbit enabling the observation of the designated range, and observes the observation range including the designated range. The specified observation satellite generates observation data based on the observation result. The acquiring unit 130 acquires the observation data generated by the specified observation satellite. In the present disclosure, the observation data based on the result of observing the observation range including the designated range by the observation satellite specified by the specifying unit 120 is also referred to as "requested observation data". Here, in a case where the time (above-described predicted time) when the specified observation satellite observes the observation range including the designated range is later than the time when the specifying unit 120 specifies the observation satellite, the acquiring unit 130 waits until the specified observation satellite generates the requested observation data, that is, until the predicted time. Then, at the predicted time, when the specified observation satellite generates the requested observation data, the acquiring unit 130 receives and acquires the requested observation data. In a case where the time when the specified observation satellite observes the observation range including the designated range is earlier than the time when the specifying unit 120 specifies the observation satellite, the requested observation data has already been generated. In this case, the acquiring unit 130 acquires the requested observation data from the storage device 300 by using the information indicating the specified observation satellite and the information of the time when the specified observation satellite observes the observation range including the designated range.

In this manner, the acquiring unit 130 acquires the requested observation data which is the observation data generated by the specified observation satellite and is the observation data based on the result of observing the designated range on or after the designated time. The acquiring unit 130 is an example of the acquiring means.

### [Operation of Information Processing Device 100]

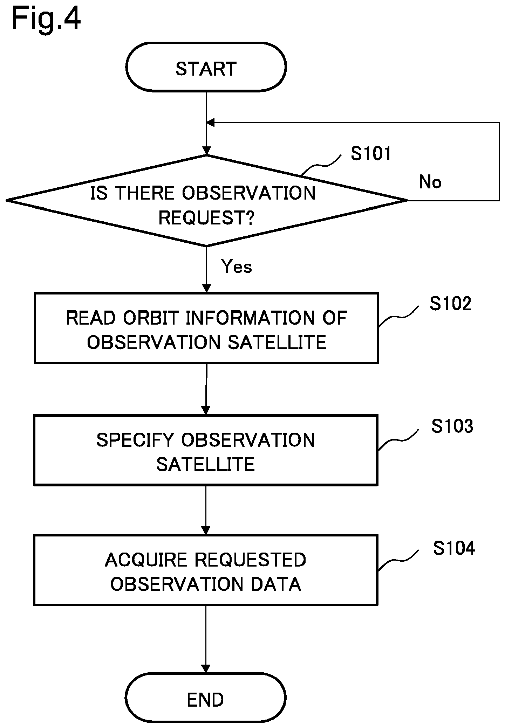

Next, the operation of the information processing device 100 will be described with reference to Fig. 4. In the present specification, each process of a flowchart is expressed by using a number, such as "S101", which is assigned to each process.

Fig. 4 is a flowchart illustrating an example of the operation of the information processing device 100. In the present operation example, it is assumed that the management terminal 400 receives an input of the designated range and the designated time from the user and transmits an observation request to the information processing device 100.

When the receiving unit 110 receives the observation request from the management terminal 400 (Yes in S101), the specifying unit 120 reads the orbit information for the observation satellite 200 from the storage device 300 (S102). Then, based on the orbit information, the specifying unit 120 specifies, from among the plurality of observation satellites 200, the observation satellite capable of observing the designated range on or after the designated time (S103).

The acquiring unit 130 acquires the requested observation data which is the observation data generated by the specified observation satellite and is based on the result of observing the designated range on or after the designated time (S104). In this case, as described above, the acquiring unit 130 may receive the requested observation data at the predicted time from the specified observation satellite. Alternatively, the acquiring unit 130 may acquire the requested observation data from the storage device 300 by using the information indicating the specified observation satellite and the information of the time when the specified observation satellite observes the observation range including the designated range.

As described above, the information processing device 100 according to the first example embodiment receives the request to acquire the observation data based on the result of observing the designated range at the designated time, and specifies the observation satellite capable of observing the designated range on or after the designated time from among the plurality of observation satellites 200 based on the orbit information for the plurality of observation satellites 200. Then, the information processing device 100 acquires the requested observation data, the required observation data being the observation data generated by the specified observation satellite and based on the result of observing the designated range on or after the designated time.

The observation satellite continues to move while observing the orbit. Therefore, it is difficult to observe, by using one observation satellite, a range where a certain event occurs at a time when the event occurs, such as a time when a disaster occurs or a time when a suspicious ship is found in the Japanese waters. Even in a case where a plurality of observation satellites is used, since an enormous amount of observation data is generated by the plurality of observation satellites, there is a possibility that it takes time to present observation data desired by the user. On the other hand, since the information processing device 100 according to the first example embodiment has the above-described configuration, it is possible to specify which observation satellite among the plurality of observation satellites can observe and when the designated range can be observed. For example, in response to the observation request from the user according to occurrence of the event, the information processing device 100 can acquire the observation data from the observation satellite capable of performing observation in response to the observation request. Therefore, in a case where the observation is performed by using the observation satellite, the information processing device 100 according to the first example embodiment can rapidly present the data based on the user-desired observation result to the user.

The information processing device 100 according to the first example embodiment may specify the observation satellite capable of observing the designated range at the time closest to the designated time from among the plurality of observation satellites. As a result, the information processing device 100 according to the first example embodiment can present data closer to the data based on the user-desired observation result to the user.

### <Second example embodiment>

Next, an observation system including an information processing device according to a second example embodiment will be described.

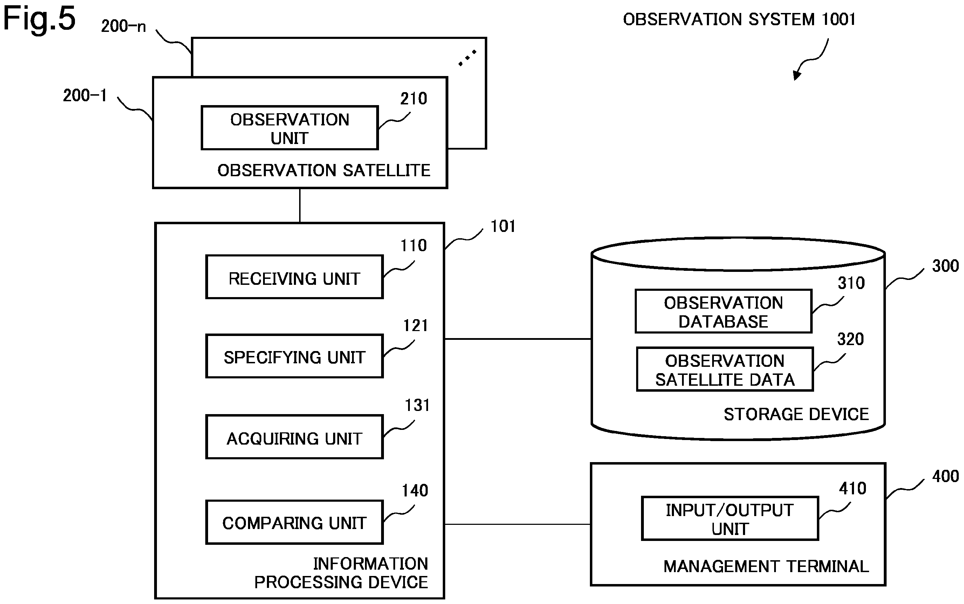

Fig. 5 is a block diagram illustrating an example of a configuration of an observation system 1001 according to the second example embodiment. As illustrated in Fig. 5, the observation system 1001 includes an information processing device 101 instead of the information processing device 100 in the first example embodiment, and is the same as the observation system 1000 described in the first example embodiment except for the above. That is, the observation system 1001 includes the information processing device 101, the observation satellite 200, the storage device 300, and the management terminal 400. The description of contents in which the configuration and operation of the observation system 1001 illustrated in Fig. 5 overlap with the description of the first example embodiment will be omitted.

### [Details of Observation Satellite 200]

As illustrated in Fig. 5, the observation satellite 200 includes an observation unit 210. The observation unit 210 observes an observation range. Specifically, the observation unit 210 acquires information, which is obtained by using the sensor, on the observation range of the ground surface. The observation unit 210 generates observation data based on the observation result and transmits the generated observation data to the information processing device 101. In addition to the observation data, the observation unit 210 transmits, to the information processing device 101, information indicating the date and time of the observation by the observation satellite 200, information indicating the observation range, and information indicating the observation setting at the time of observation. The information indicating the observation range is information in which the pixel of the observation data and the position of the ground surface are associated with each other. The information indicating the observation range can be generated by using a map model in which the position of the ground surface and the feature of the ground surface are associated with each other in advance. For example, the map model is used to associate the feature of the ground surface with the information acquired by the sensor, so the pixel of the observation data and the position of the ground surface are associated with each other. Each of the observation satellites 200 may hold a map model in advance. The map model may be stored in the storage device 300.

The observation setting is a value of a parameter of the observation satellite 200 and a value of a parameter of the sensor used for observation. For example, in a case where the sensor mounted on the observation satellite 200 is a SAR, the observation setting is an incident angle of a radiated electromagnetic wave with respect to the ground surface, a wavelength of the radiated electromagnetic wave, a resolution of the sensor, and the like, but is not limited to this example. The observation setting may include the resolution of the observation data or may include the position of the observation satellite 200 on the orbit at the time of the observation.

### [Details of Storage Device 300]

As illustrated in Fig. 5, the storage device 300 stores an observation database 310 and observation satellite data 320. The observation database 310 is information in which the observation data generated by each of the observation satellites 200 and the information regarding the observation data are associated with each observation satellite 200. The observation database 310 is stored by the information processing device 101. Details of the observation database 310 will be described later.

The observation satellite data 320 is information in which identification information for identifying the observation satellite 200 is associated with the information regarding the observation satellite. The information regarding the observation satellite is associated with orbit information and information indicating the performance of the observation satellite. The information indicating the performance of the observation satellite is, for example, the resolution of the sensor mounted on each of the observation satellites 200, the wavelength band of an acquirable electromagnetic wave, the resolution of generatable observation data, and the like, but is not limited to this example. In a case where the sensor is a sensor which radiates an electromagnetic wave, the information indicating the performance of the observation satellite may include, for example, a possible value of the incident angle of the radiated electromagnetic wave with respect to the ground surface, a possible wavelength band of the radiated electromagnetic wave, and the like.

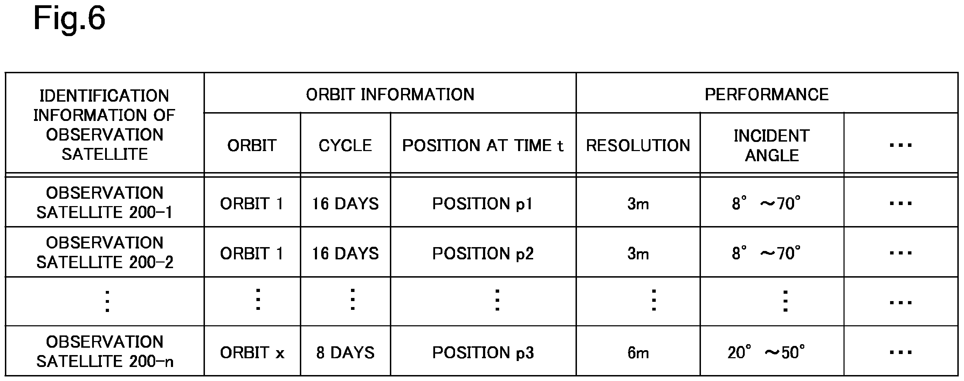

Fig. 6 is a diagram illustrating an example of the observation satellite data 320. As illustrated in the example of Fig. 6, in the observation satellite data 320, the identification information, the orbit information, and the information indicating the performance of the observation satellite are associated with each observation satellite 200. Furthermore, in the example of Fig. 6, information indicating the orbit on which each of the observation satellites 200 moves, information indicating the cycle in which each of the observation satellites 200 moves on the orbit, and information indicating the position of each of the observation satellites 200 on the orbit at time t are included as the orbit information. It is assumed that the position on the orbit where the observation satellite 200 exists is periodically calculated. The record in the first line of Fig. 6 indicates that "observation satellite 200-1" moves on "orbit 1" during "16 days" and exists at "position p1" at time t. Furthermore, the record in the first line of Fig. 6 indicates that the resolution of the "observation satellite 200-1" is "3 m (meter)", and the incident angle of the sensor can be "8° to 70°". The observation satellite data 320 may be further associated with information indicating the velocity, weight, and size of each of the observation satellites 200, the size of the observation range of each of the observation satellites 200, and the like. The observation satellite data 320 may be associated with the information of the observation setting set for each of the observation satellites 200. The observation satellite data 320 is stored in the storage device 300 in advance.

### [Details of Management Terminal 400]

As illustrated in Fig. 5, the management terminal 400 includes an input/output unit 410. The input/output unit 410 receives an input from the user. Specifically, for example, the input/output unit 410 receives an input of the range of the ground surface and the time. When receiving the input from the user, the input/output unit 410 transmits an observation request, which is a request to acquire observation data based on the result of observing the designated range at the designated time, to the information processing device 101. The observation request includes information indicating the designated range and information indicating the designated time.

Here, for example, the user may make the observation request in order to grasp how the range where the event such as a disaster has occurred has changed before and after the occurrence of the event. In this case, the observation data before and after the occurrence of the event is desirably observed under the same condition. Therefore, the user may make the observation request to the observation satellite which is capable of performing observation before the occurrence of the event under the same conditions as that of the observation satellite which has observed the range where the event has occurred. In such a case, the input/output unit 410 further receives an input of the condition regarding the observation setting from the user. The condition regarding the observation setting is any one or a combination of the following conditions: the resolution of the observation data to be generated is equal to or more than a predetermined value; the orbit is a predetermined orbit; the incident angle of the electromagnetic wave radiated on the ground surface is a predetermined angle; and the electromagnetic wave in a predetermined wavelength band can be acquired, for example. The observation request further includes information indicating the condition regarding the observation setting. Hereinafter, the condition regarding the observation setting is also simply referred to as an "observation condition".

The input/output unit 410 outputs the information received from the information processing device 101. For example, the input/output unit 410 acquires the observation data from the information processing device 101, and displays the acquired observation data on a display included in the management terminal 400. As a result, the observation system 1001 can present the observation data to the user via the management terminal 400.

### [Details of information processing device 101]

As illustrated in Fig. 5, the information processing device 101 includes the receiving unit 110, a specifying unit 121, an acquiring unit 131, and a comparing unit 140. The specifying unit 121 and the acquiring unit 131 perform operations described below in addition to the operations of the specifying unit 120 and the acquiring unit 130 described in the first example embodiment, respectively.

The specifying unit 121 specifies at least one of the observation satellites 200 in response to the observation request. Specifically, when the receiving unit 110 receives the observation request, the specifying unit 121 reads the observation satellite data 320. Then, the specifying unit 121 selects the observation satellite satisfying the observation condition from among the plurality of observation satellites 200. For example, in a case where the condition indicates that "the resolution of the observation data to be generated is equal to or more than a predetermined value", the specifying unit 121 selects the observation satellite which can generate observation data with a resolution equal to or more than the predetermined value from among the plurality of observation satellites 200. In a case where a plurality of observation satellites is selected, based on the orbit information, the specifying unit 121 calculates the time when each of the selected observation satellites moves to the position on the orbit enabling the observation of the designated range. Then, based on the calculated time, the specifying unit 121 specifies the observation satellite which moves to the position on the orbit enabling the observation of the designated range on or after the designated time.

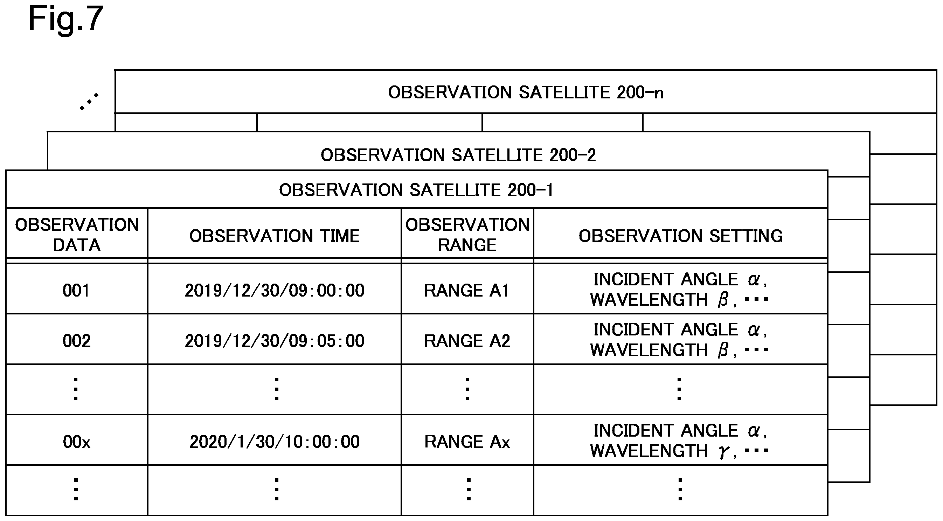

The acquiring unit 131 acquires the observation data from each of the observation satellites 200. In addition to the observation data, the acquiring unit 131 acquires, from each of the observation satellites 200, information indicating the date and time of the observation of the observation satellite 200, information indicating the observation range, and information indicating the observation setting at the time of observation. The acquiring unit 131 associates the acquired information and stores the information in the observation database 310 of the storage device 300. Fig. 7 is a diagram illustrating an example of the observation database 310. As illustrated in Fig. 7, in the observation database 310, the observation data generated by each of the observation satellites 200, the observation time, the observation range, and the observation setting are associated with each observation satellite 200. For example, the record in the first line of Fig. 7 indicates that the observation time of the observation data "001" is "9:00:00 on December 30, 2019", the observation range is "range A1", and the electromagnetic waves radiated from the sensor used for the observation are "incident angle a" and "wavelength β".

The acquiring unit 131 acquires the requested observation data generated by the observation satellite specified by the specifying unit 121.

The comparing unit 140 compares a plurality of pieces of observation data. Specifically, when the requested observation data is acquired by the acquiring unit 131, the comparing unit 140 reads the observation data based on the result of observing the observation range including the designated range from the observation database 310 of the storage device 300. At this time, for example, the comparing unit 140 may read the observation data generated by the observation satellite satisfying the observation condition in the observation data based on the result of observing the observation range including the designated range. The comparing unit 140 may read the observation data generated until a specific time since the designated time in the observation data based on the result of observing the observation range including the designated range. Then, the comparing unit 140 compares the observation data based on the result of observing the observation range including the designated range with the requested observation data. Then, the comparing unit 140 transmits a comparison result indicating a difference between the observation data based on the result of observing the observation range including the designated range and the requested observation data to the management terminal 400.

For example, in a case where the ground surface is observed by the SAR, the observation satellite 200 acquires, as the observation result, intensity information indicating the intensity of the electromagnetic wave obtained by reflecting the electromagnetic wave radiated on the ground surface from the ground surface toward the sensor, for example (the intensity information is also referred to as a backscatter coefficient). At this time, the observation data acquired by the acquiring unit 131 includes the intensity information. In such a case, for example, the comparing unit 140 compares the intensity information included in the requested observation data with the intensity information included in the observation data read from the observation database 310, and extracts a portion where the intensity increases or a portion where the intensity decreases in the observation range. For example, the comparing unit 140 can obtain a change in the height of the ground surface in the observation range by using the extracted information and the data indicating the height of the ground surface in the observation range. The example in which SAR is used is not limited to this example. For example, the observation satellite 200 may acquire phase information indicating the phase of the electromagnetic wave obtained by reflecting the electromagnetic wave radiated on the ground surface from the ground surface toward the sensor. In such a case, the comparing unit 140 extracts a phase difference between the phase information included in the requested observation data and the phase information included in the observation data read from the observation database 310.

In this manner, the comparing unit 140 compares a plurality of pieces of observation data. Then, the comparing unit 140 compares the requested observation data with the observation data being based on the result of observing the designated range from among the observation data stored in the storage device. The comparing unit 140 is an example of the comparing means.

### [Operation of observation system 1001]

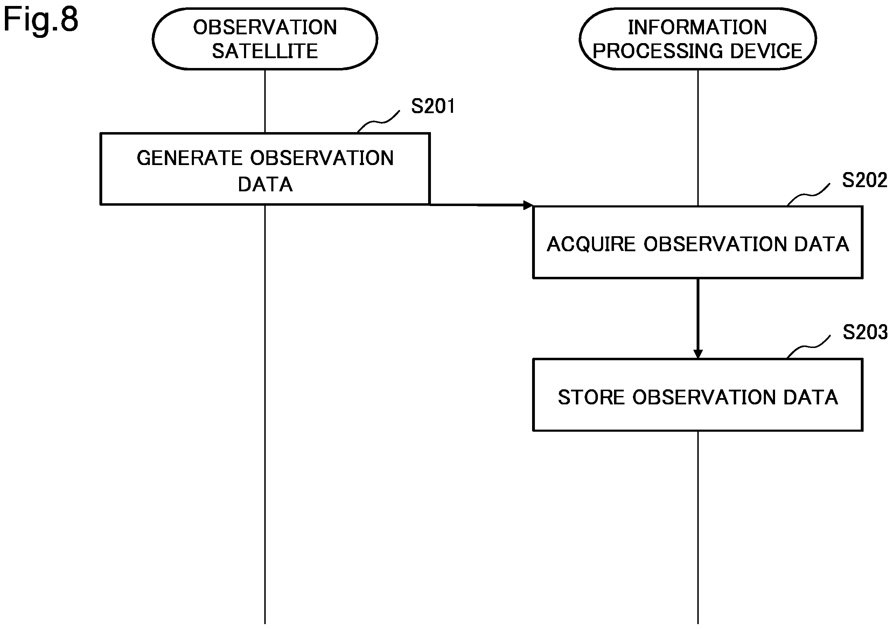

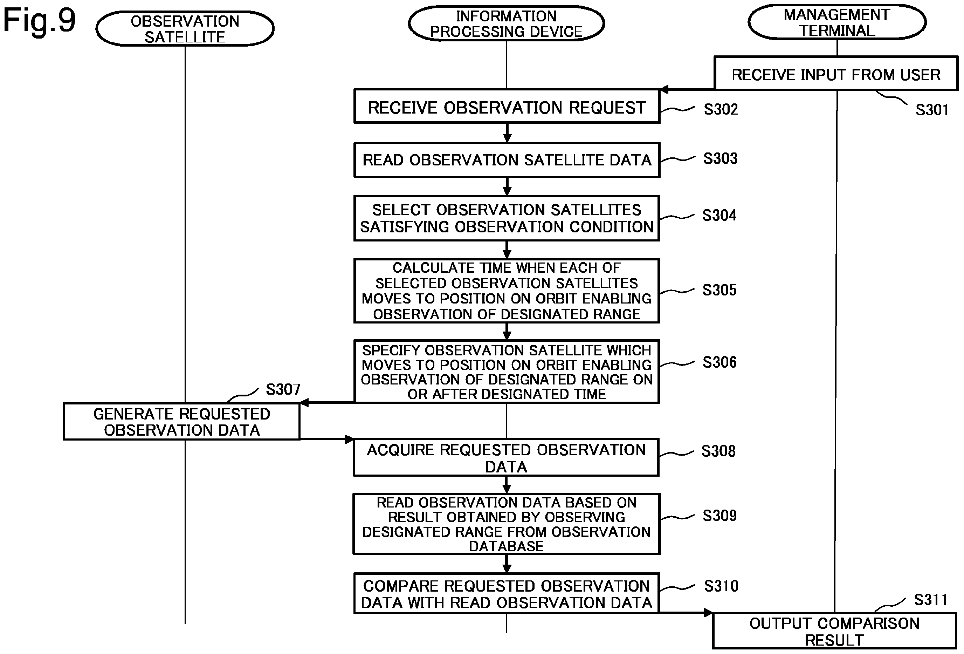

Next, an operation of the observation system 1001 will be described with reference to Figs. 8 and 9.

First, the operation of the observation system 1001 when the management terminal 400 does not receive an input from the user will be described. Fig. 8 is a sequence diagram illustrating the operation of the observation system 1001 when the input is not received from the user. The operation of the observation satellite in Fig. 8 indicates the operation of each of the observation satellites 200.

Each of the observation satellites 200 observes the observation range while moving on the orbit, and generates observation data (S201). Then, the acquiring unit 131 of the information processing device 101 acquires the observation data from each of the observation satellites 200 (S202). Then, the acquiring unit 131 stores the acquired observation data, the observation time, the observation range, and the observation setting in association with each observation satellite 200 in the observation database 310 of the storage device 300 (S203). The processes of S201, S202, and S203 illustrated in Fig. 8 are repeated for a predetermined period.

Next, the operation of the observation system 1001 when the management terminal 400 receives an input from the user will be described. Fig. 9 is a sequence diagram illustrating the operation of the observation system 1001 when the input is received from the user. The operation of the observation satellite in Fig. 9 is the operation of the observation satellite specified by the specifying unit 121.

The input/output unit 410 of the management terminal 400 receives an input from the user (S301). At this time, information indicating the designated range, information indicating the designated time, and information indicating the observation condition are input. For example, when a disaster occurs, the user inputs the range where the disaster occurs as the designated range, and inputs the time when the disaster occurs as the designated time. With respect to the observation condition, for example, the user inputs the observation setting of the observation satellite in which the observation range including the designated range is observed before the disaster occurs. The input/output unit 410 transmits an observation request including the information input from the user to the information processing device 101.

The receiving unit 110 of the information processing device 101 receives the observation request from the management terminal 400 (S302). The specifying unit 121 reads the observation satellite data 320 from the storage device 300 (S303). Based on the read observation satellite data 320, the specifying unit 121 selects the observation satellites satisfying the observation condition from among the plurality of observation satellites 200 (S304). Then, the specifying unit 121 calculates the time when each of the selected observation satellites 200 moves to the position on the orbit enabling the observation of the designated range (S305). Based on the calculated time, the specifying unit 121 specifies the observation satellite which moves to the position on the orbit enabling the observation of the designated range on or after the designated time (S306).

When the specified observation satellite moves to the position on the orbit enabling the observation of the designated range, the observation unit 210 of the specified observation satellite observes the designated range and generates requested observation data based on the observation result (S307). The observation unit 210 transmits the generated requested observation data to the information processing device 101.

The acquiring unit 131 of the information processing device 101 acquires the requested observation data from the specified observation satellite (S308). The comparing unit 140 reads the observation data based on the result of observing the designated range from the observation database of the storage device 300 (S309). Specifically, the comparing unit 140 acquires the observation data based on the result of the observation of the observation satellite satisfying the observation condition in the observation data based on the result of observing the designated range. Then, the comparing unit 140 compares the requested observation data with the read observation data (S3 10). For example, when a disaster occurs, the comparing unit 140 compares the observation data acquired before and after the time when the disaster occurs, and generates a result indicating a change in the range where the disaster occurs.

The management terminal 400 receives a comparison result indicating a difference between the requested observation data and the read observation data from the comparing unit 140, and outputs the received comparison result (S311).

As described above, similarly to the information processing device 100 of the first example embodiment, in a case where the observation is performed by using the observation satellite, the information processing device 101 of the second example embodiment can rapidly present the user-desired observation result to the user.

The information processing device 101 according to the second example embodiment specifies, from among the plurality of observation satellites, the observation satellite satisfying the condition regarding the observation setting and being capable of observing the designated range on or after the designated time. For example, the user may make an observation request to grasp a change in the designated range before and after the designated time by using the observation data. In such a case, the information processing device 101 can specify, for example, the observation satellite capable of observing the designated range under the same conditions as that of the observation satellite which has observed the designated range before the designated time. Therefore, the information processing device 101 according to the second example embodiment can present the user-desired observation result.

The information processing device 101 according to the second example embodiment acquires the observation data from the plurality of observation satellites, stores the acquired observation data in the storage device, and compares the requested observation data with the observation data based on the result of observing of the designated range in the observation data stored in the storage device. With this configuration, the information processing device 101 according to the second example embodiment can rapidly present a comparison result that is information indicating a change in the situation of the designated range before and after the occurrence of a certain event such as the occurrence of a disaster. Furthermore, the information processing device 101 according to the second example embodiment compares the requested observation data with the observation data, which is based on the result of observation by the observation satellite satisfying the condition regarding the observation setting and based on the result of observing the designated range, in the observation data stored in the storage device. With this configuration, the information processing device 101 according to the second example embodiment performs comparison by using the observation data acquired from the observation satellites satisfying the same observation condition, and thus can present a more accurate comparison result.

### [First Modification]

In a case where the observation satellite not satisfying the observation condition can observe the designated range earlier than the observation satellite satisfying the observation condition on or after the designated time, the specifying unit 121 may specify the observation satellite not satisfying the observation condition.

That is, in the process of S305, the specifying unit 121 also calculates the time when each of the observation satellites not satisfying the observation condition moves to the position on the orbit enabling the observation of the designated range. Then, in a case where the observation satellite not satisfying the observation condition can observe the designated range earlier than the observation satellite satisfying the observation condition on or after the designated time, the specifying unit 121 specifies the observation satellite not satisfying the observation condition in addition to the process of S306.

In the process of S308, the acquiring unit 131 acquires the requested observation data from each of the specified observation satellites.

As described above, in a case where there is an observation satellite not satisfying the condition regarding the observation setting and capable of observing the designated range earlier than the observation satellite satisfying the condition regarding the observation setting on or after the designated time, the information processing device 101 of a first modification specifies the observation satellite not satisfying the condition regarding the observation setting and acquires the requested observation data from the observation satellite not satisfying the condition regarding the specified observation setting. With this configuration, the information processing device 101 of the first modification can present earlier the observation data based on the result of observing the designated range to the user. For example, it is assumed that the observation satellite satisfying the observation condition can observe the designated range in more detail than the observation satellite not satisfying the observation condition. In some cases, the user desires to rapidly grasp even a rough situation for the designated range after the occurrence of the event. In such a case, the information processing device 101 can present even observation data obtained from the observation satellite not satisfying the observation condition to the user.

The comparing unit 140 of the first modification may compare the requested observation data acquired from the observation satellite not satisfying the observation condition with the observation data stored in the storage device 300 and based on the result of observing the designated range. As a result, as described above, in a case where the user desires to rapidly grasp even the rough situation for the designated range after the occurrence of the event, it is possible to rapidly present the comparison result indicating the change in the situation of the designated range.

### [Second Modification]

The observation condition may be determined in advance. Specifically, even in a case where the observation condition is not input to the management terminal 400 by the user, the observation condition may be determined in advance in the storage device 300 or the information processing device 101.

In this case, the specifying unit 121 specifies the observation satellite capable of observing the designated range on or after the designated time with the same observation setting as that of the observation satellite which has observed the observation range including the designated range before the designated time. Specifically, for example, when the receiving unit 110 receives the observation request, the specifying unit 121 specifies the observation setting associated with the observation data based on the result of observing the designated range in the observation data of the observation database 310 in addition to the process of S303. In the process of S304, the specifying unit 121 selects the observation satellites capable of performing observation with the specified observation setting. Then, in the process of S305, the specifying unit 121 calculates the time when the selected observation satellite moves to the position on the orbit enabling the observation of the designated range on or after the designated time. Then, in the process of S306, the specifying unit 121 specifies a designated type of observation satellite capable of observing the designated range on or after the designated time from among the observation satellites capable of performing observation with the specified observation setting.

In the process of S309, the comparing unit 140 reads, from the observation database 310, the observation data based on the result of observing the observation range including the designated range in the observation data based on the result of performing observation with the observation setting specified by the specifying unit 121.

As described above, even in a case where the user does not input the observation condition, the information processing device 101 of a second modification can present the comparison result using the observation data acquired from the observation satellites satisfying the same observation condition.

### <Third Example Embodiment>

Next, an observation system including an information processing device according to a third example embodiment will be described.

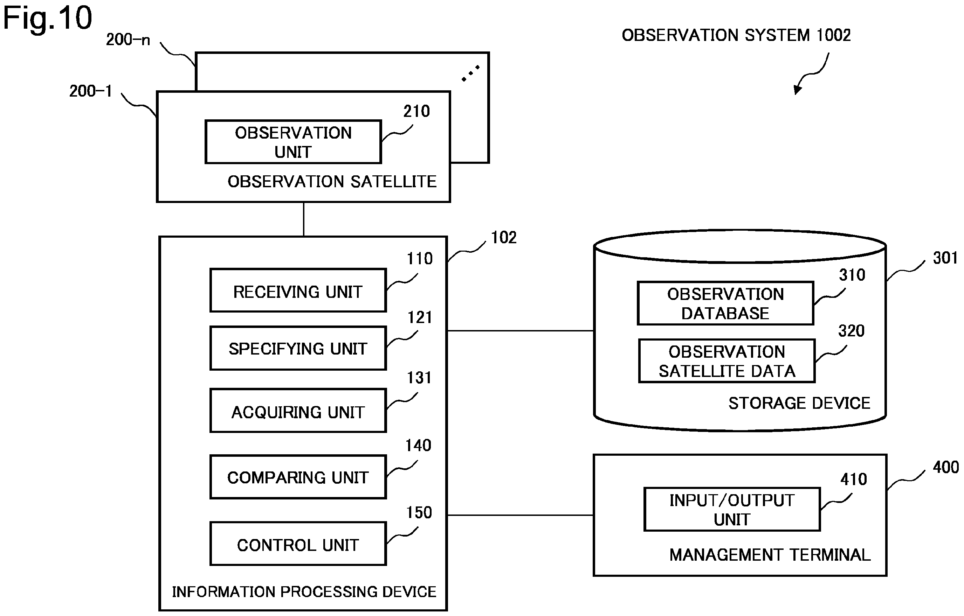

Fig. 10 is a block diagram illustrating an example of a configuration of an observation system 1002 according to the third example embodiment. As illustrated in Fig. 10, the observation system 1002 includes an information processing device 102 instead of the information processing device 101 in the second example embodiment, and is the same as the observation system 1001 described in the second example embodiment except for the above. That is, the observation system 1002 includes the information processing device 102, the observation satellite 200, the storage device 300, and the management terminal 400. The description of contents in which the configuration and operation of the observation system 1002 illustrated in Fig. 10 overlap with the description of the second example embodiment will be omitted.

### [Details of information processing device 102]

As illustrated in Fig. 10, the information processing device 102 includes the receiving unit 110, the specifying unit 121, the acquiring unit 131, the comparing unit 140, and a control unit 150.

The control unit 150 performs control to cause the observation satellite 200 to observe the designated range. Specifically, for example, the control unit 150 causes the observation satellite specified by the specifying unit 121 to observe the designated range at the time of movement to the position enabling the observation of the designated range. At this time, the control unit 150 changes the observation setting of the specified observation satellite to the observation setting indicated in the observation condition. For example, in the observation setting indicated in the observation condition, it is assumed that the incident angle of the electromagnetic wave radiated on the ground is 30°. In this case, the control unit 150 controls the specified observation satellite in such a way that the incident angle of the electromagnetic wave radiated on the ground becomes 30°. In this manner, the control unit 150 changes the observation setting of the specified observation satellite, and performs control to cause the specified observation satellite to observe the designated range with the changed observation setting. The control unit 150 is an example of the control means.

### [Operation of observation system 1002]

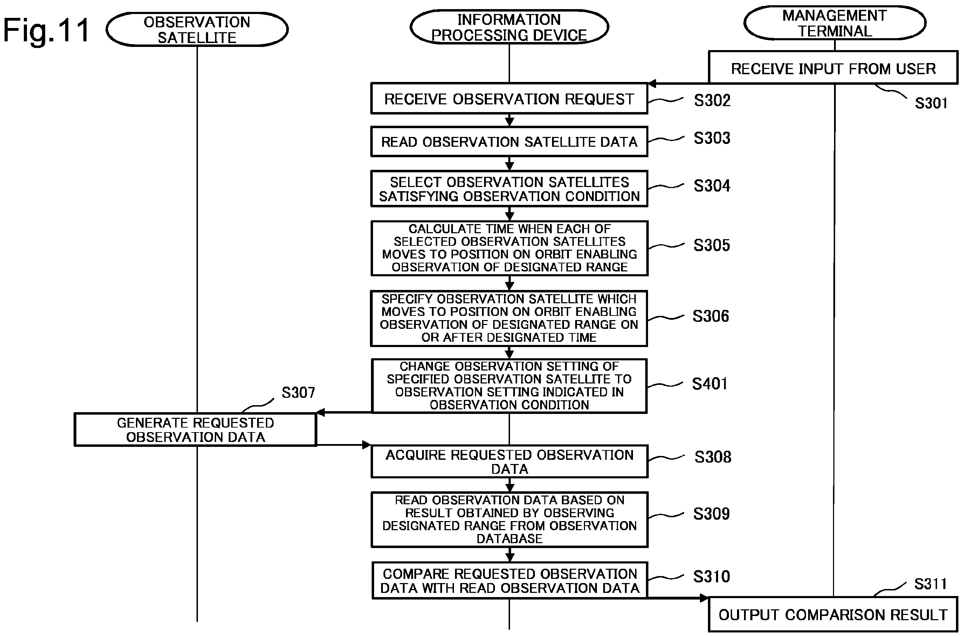

Next, an operation of the observation system 1002 will be described with reference to Fig. 11.

Fig. 11 is a sequence diagram illustrating the operation of the observation system 1002 when an input is received from the user. In the present operation example, the description of each process in the sequence diagram illustrated in Fig. 11 having the same assigned number as the number assigned to each process in the sequence diagram illustrated in Fig. 9 will be omitted.

In the process of S306, when the specifying unit 121 specifies the observation satellite which moves to the position on the orbit enabling the observation of the designated range on or after the designated time, the control unit 150 performs control to change the observation setting of the specified observation satellite to the observation setting indicated in the observation condition (S401).

Then, in the process of S307, when the specified observation satellite moves to the position on the orbit enabling the observation of the designated range, the observation unit 210 of the specified observation satellite observes the designated range with the changed observation setting, and generates requested observation data based on the observation result.

In this manner, the information processing device 102 according to the third example embodiment changes the observation setting of the specified observation satellite, and performs control to cause the specified observation satellite to observe the designated range with the changed observation setting. With this configuration, the information processing device 102 according to the third example embodiment can acquire the requested observation data even in a case where the observation setting set in the observation satellite 200 is different from the specified observation setting.

### <Fourth Example Embodiment>

Next, an observation system including an information processing device according to a fourth example embodiment will be described.

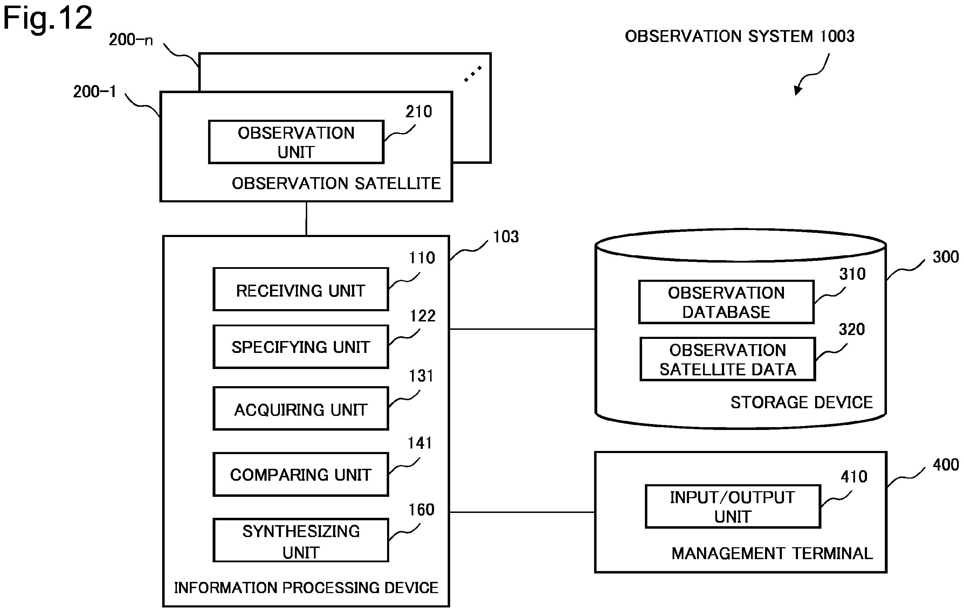

Fig. 12 is a block diagram illustrating an example of a configuration of an observation system 1003 according to the fourth example embodiment. As illustrated in Fig. 12, the observation system 1003 includes an information processing device 103 instead of the information processing device 101 in the second example embodiment, and is the same as the observation system 1001 described in the second example embodiment except for the above. That is, the observation system 1003 includes the information processing device 103, an observation satellite 200, the storage device 300, and the management terminal 400. The description of contents in which the configuration and operation of the observation system 1003 illustrated in Fig. 12 overlap with the description of the second example embodiment will be omitted.

### [Details of information processing device 103]

As illustrated in Fig. 12, the information processing device 103 includes the receiving unit 110, a specifying unit 122, the acquiring unit 131, a comparing unit 141, and a synthesizing unit 160. The information processing device 103 may include the control unit 150. The specifying unit 122 and the comparing unit 141 perform operations described below in addition to the operations of the specifying unit 121 and the comparing unit 140 described in the second example embodiment, respectively.

The specifying unit 122 specifies at least one of the observation satellites 200 capable of observing at least a part of the designated range in response to the observation request. Specifically, when the receiving unit 110 receives the observation request, the specifying unit 122 calculates, for each of the observation satellites 200, the position on the orbit enabling the observation of at least a part of the designated range based on the orbit information. Then, the specifying unit 122 uses the orbit information to calculate the time when each of the observation satellites 200 moves to the position on the orbit enabling the observation of at least a part of the designated range. Then, based on the calculated time, the specifying unit 122 specifies the observation satellite which moves to the position on the orbit enabling the observation of at least a part of the designated range on or after the designated time. In a case where the entire designated range is not observed by the specified observation satellite, for example, the specifying unit 122 next specifies the observation satellite capable of observing at least a part of the designated range. At this time, the specifying unit 122 may specify the observation satellite capable of observing the designated range including a portion different from at least a part of the designated range. The specifying unit 122 repeats this specification process until the entire designated range is observed. At this time, the acquiring unit 131 acquires the requested observation data from all the specified observation satellites.

The synthesizing unit 160 synthesizes a plurality of pieces of observation data. Specifically, in a case where a plurality of pieces of requested observation data is acquired and the entire designated range is observed by the acquired plurality of requested observation data, the synthesizing unit 160 synthesizes the plurality of requested observation data. For example, the synthesizing unit 160 associates each pixel of the plurality of pieces of requested observation data with the position of the ground surface by using map data. The synthesizing unit 160 also specifies an image area relevant to the designated range. Then, the synthesizing unit 160 combines the image areas relevant to the designated range included in the plurality of pieces of requested observation data in such a way that the positions of the ground surface relevant to each of the pixels are continuous. At this time, the synthesizing unit 160 may also perform a combining process on the image area relevant to the outside of the designated range of the observation range in such a way that the positions of the ground surface relevant to each of the pixels are continuous. Similarly, also for the observation data stored in the observation database 310, the synthesizing unit 160 may synthesize a plurality of pieces of observation data in such a way that the observation data becomes the observation data based on the result of observing the entire designated range.

In this manner, the synthesizing unit 160 synthesizes the plurality of pieces of observation data. The synthesizing unit 160 is an example of the synthesizing means.

The comparing unit 141 compares the observation data based on the result of observing the observation range including the designated range with the requested observation data. At this time, in a case where the requested observation data or the observation data based on the result of observing the observation range including the designated range has been synthesized by the synthesizing unit 160, the comparing unit 141 uses the synthesized requested observation data or the synthesized observation data.

### [Operation of observation system 1003]

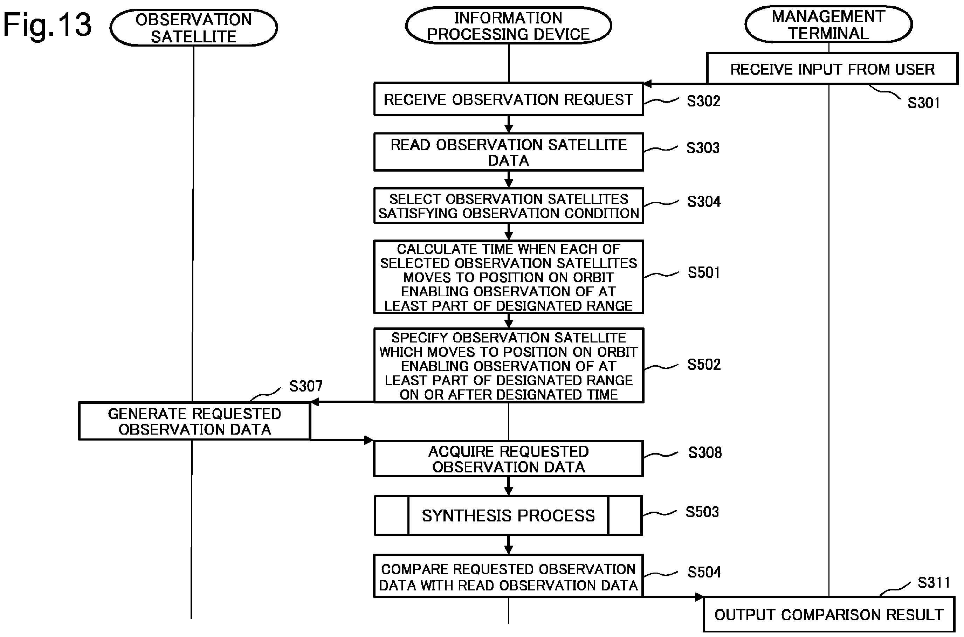

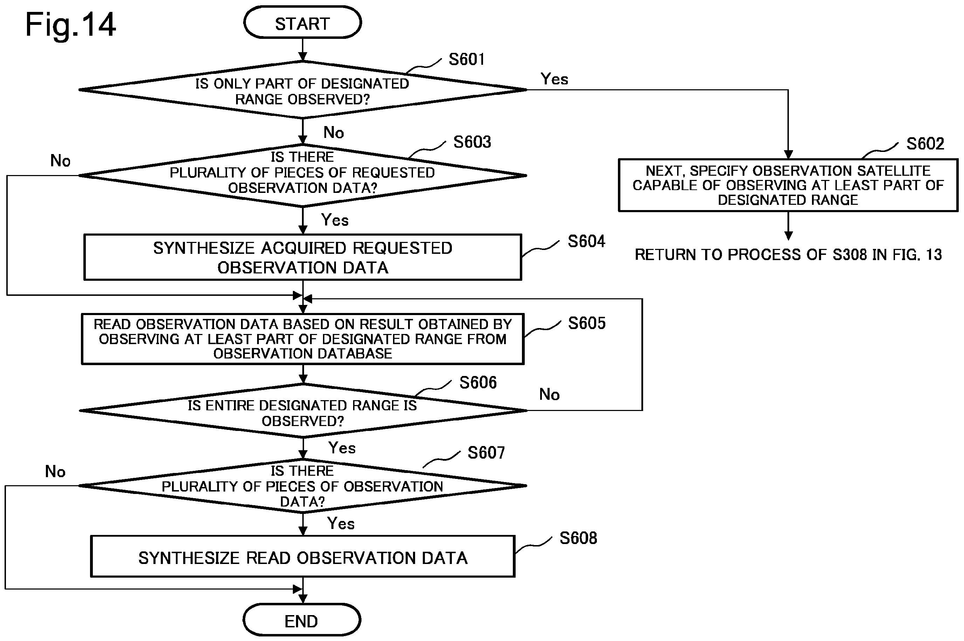

Next, an operation of the observation system 1003 will be described with reference to Figs. 13 and 14. Specifically, the operation of the observation system 1003 when the management terminal 400 receives an input from the user will be described.

Fig. 13 is a sequence diagram illustrating the operation of the observation system 1003 when the input is received from the user. The operation of the observation satellite in Fig. 13 is the operation of the observation satellite specified by the specifying unit 122. In the present operation example, the description of each process in the sequence diagram illustrated in Fig. 13 having the same assigned number as the number assigned to each process in the sequence diagram illustrated in Fig. 9 will be omitted.

Instead of the process of S305 of Fig. 9, based on the orbit information included in the observation satellite data of the storage device 300, the specifying unit 122 calculates the time when each of the selected observation satellites moves to the position on the orbit enabling the observation of at least a part of the designated range (S501). Instead of S306 in Fig. 9, based on the calculated time, the specifying unit 122 specifies the observation satellite which moves to the position on the orbit enabling the observation of at least a part of the designated range on or after the designated time (S502).

In the process of S308, when the acquiring unit 131 acquires the requested observation data from the specified observation satellite, the information processing device 103 performs a synthesis process on the acquired requested observation data (S503).

Fig. 14 is a flowchart illustrating an example of the synthesis process. First, in a case where only a part of the designated range is observed in the acquired requested observation data (Yes in S601), the specifying unit 122 next specifies the observation satellite capable of observing at least a part of the designated range (S602). Then, the information processing device 103 returns to the process of S308 in Fig. 13.

In a case where the entire designated range is observed in the acquired requested observation data (No in S601), and a plurality of pieces of requested observation data is acquired (Yes in S603), the designated range exceeds the observation range of one observation satellite. In this case, the synthesizing unit 160 synthesizes the plurality of pieces of acquired requested observation data (S604). In a case where the entire designated range is observed, and a plurality of pieces of requested observation data is not acquired (No in S603), the designated range falls within the observation range of one observation satellite. In this case, the synthesizing unit 160 does not perform the process of S604.

Next, the comparing unit 141 reads the observation data based on the result of observing at least a part of the designated range from the observation database 310 of the storage device 300 (S605). At this time, in a case where the entire designated range is not observed in one piece of observation data (No in S606), the comparing unit 141 performs the process of S605 again. In a case where the entire designated range is observed in the read observation data (Yes in S606), and a plurality of pieces of observation data is acquired (Yes in S607), the synthesizing unit 160 synthesizes the observation data read by the comparing unit 141 similarly to the process of S604 (S608). In a case where the entire designated range is observed in the read observation data, and a plurality of pieces of observation data is not acquired (No in S607), the synthesizing unit 160 does not perform the process of S608.

Returning to Fig. 13, the comparing unit 141 compares the requested observation data with the read observation data (S504). At this time, in a case where the requested observation data and the read observation data are synthesized by the synthesizing unit 160, the comparing unit 141 compares the synthesized requested observation data with the synthesized read observation data.

In a case where a first observation satellite which is the specified observation satellite can observe a part of the designated range, the information processing device 103 according to the fourth example embodiment specifies, a second observation satellite being the observation satellite capable of observing the designated range including a part different from the part of the designated range and observing next to the first observation satellite, acquires the requested observation data based on a result of observing the part of the designated range from the first observation satellite, and acquires the requested observation data based on a result of observing the part of the designated range from the second observation satellite. Then, the information processing device 103 combines an image area relevant to the designated range included in the requested observation data acquired from the first observation satellite and an image area relevant to the part of the designated range included in the requested observation data acquired from the second observation satellite. With this configuration, for example, even in a case where the designated range exceeds the observation range of the observation satellite 200, the information processing device 103 can acquire the requested observation data based on the result of observing the part of the designated range in order from the designated time by using a plurality of observation satellites each capable of observing a part of the designated range. Then, the information processing device 103 can acquire the result of observing the entire designated range by using the acquired requested observation data. Therefore, the information processing device 103 according to the fourth example embodiment can rapidly present the user-desired observation result to the user even in a case where the designated range exceeds the observation range of the observation satellite.

### [Third Modification]

The synthesizing unit 160 may synthesize the requested observation data acquired from one observation satellite. That is, in a case where only a part of the designated range is observed in the acquired requested observation data (Yes in S601), the synthesizing unit 160 returns to the process of S308 in Fig. 13 without performing the process of S602.

At this time, the acquiring unit 131 acquires the requested observation data when the observation satellite specified in the process of S502 next observes at least a part of the designated range.

As described above, in a case where the specified observation satellite can observe a part of the designated range, the information processing device 103 according to the fourth example embodiment acquires, from the specified observation satellite, the requested observation data based on a result of observing the part of the designated range on or after the designated time and the requested observation data based on a result of observing the designated range including the part of the designated range after a time based on the result of observing the requested observation data. Then, the information processing device 103 combines the image area relevant to the part of the designated range and the image area relevant to the part of the designated range included in a plurality of acquired requested observation data. With this configuration, for example, in a case where the designated range exceeds the observation range of the observation satellite, the information processing device 103 can perform synthesis by using the requested observation data acquired from the same observation satellite, and thus can present the requested observation data synthesized more accurately.

### (Fifth Example Embodiment)

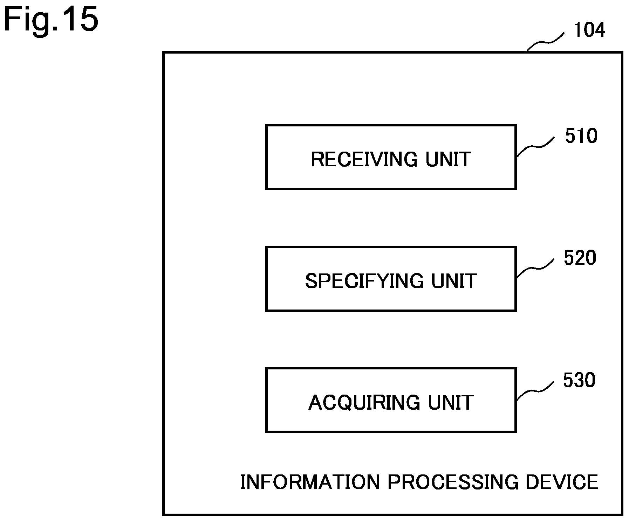

A fifth example embodiment will be described with reference to Fig. 15.

Fig. 15 is a block diagram illustrating an example of a configuration of an information processing device 104 according to the fifth example embodiment. As illustrated in Fig. 15, the information processing device 104 includes a receiving unit 510, a specifying unit 520, and an acquiring unit 530.

The receiving unit 510 receives a request to acquire the observation data based on the result of observing the designated range at the designated time.

The specifying unit 520 specifies an observation satellite capable of observing the designated range on or after the designated time from among the plurality of observation satellites based on the orbit information for the plurality of observation satellites.

The acquiring unit 530 acquires requested observation data, the required observation data being the observation data generated by the specified observation satellite and based on the result of observing the designated range on or after the designated time.

With the above configuration, the information processing device 104 according to the fifth example embodiment can specify which observation satellite among the plurality of observation satellites can observe and when the designated range can be observed. Then, for example, in response to the observation request from the user according to occurrence of the event, the information processing device 104 can acquire the observation data from the observation satellite capable of performing the earliest observation in response to the observation request among the plurality of observation satellites. Therefore, in a case where the observation is performed by using the observation satellite, the information processing device 104 according to the fifth example embodiment can rapidly present the user-desired observation result to the user.

### <Configuration Example of Hardware of Information Processing Device>

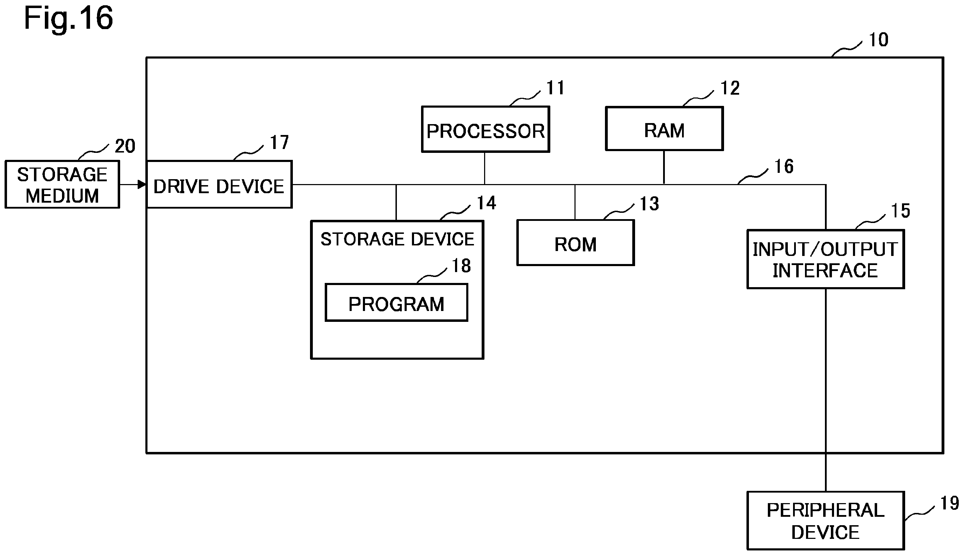

Hardware configuring the information processing devices of the first, second, third, fourth, and fifth example embodiments described above will be described. Fig. 16 is a block diagram illustrating an example of a hardware configuration of a computer device which achieves the information processing device according to each example embodiment. Each block illustrated in Fig. 16 can be achieved by a combination of a computer device 10 and software for achieving the information processing device and the information processing method in each example embodiment.

As illustrated in Fig. 16, the computer device 10 includes a processor 11, a random access memory (RAM) 12, a read only memory (ROM) 13, a storage device 14, an input/output interface 15, a bus 16, and a drive device 17. The information processing device may be achieved by a plurality of electric circuits.

The storage device 14 stores a program (computer program) 18. The processor 11 executes the program 18 of the present information processing device by using the RAM 12. Specifically, for example, the program 18 includes a program which causes a computer to execute the processes illustrated in Figs. 4, 8, 9, 11, 13, and 14. When the processor 11 executes the program 18, the functions of each of the components (the receiving units 110 and 510, the specifying units 120, 121, 122, and 520, the acquiring units 130, 131, and 530, and the like described above) of the present information processing device are achieved. The program 18 may be stored in the ROM 13. The program 18 may be recorded in the storage medium 20 and read using the drive device 17, or may be transmitted from an external device (not illustrated) to the computer device 10 via a network (not illustrated).

The input/output interface 15 exchanges data with peripheral devices (such as a keyboard, a mouse, and a display device) 19. The input/output interface 15 functions as a means for acquiring or outputting data. The bus 16 connects the components.

There are various modifications of the method for achieving the information processing device. For example, the information processing device can be achieved as a dedicated device. The information processing device can be achieved based on a combination of a plurality of devices.

A processing method for causing the storage medium to record the program for achieving each component in the functions of each example embodiment, reading the program recorded in the storage medium as a code, and executing the program in a computer are also included in the scope of each example embodiment. That is, a computer-readable storage medium is also included in the scope of each example embodiment. The storage medium in which the above-described program is recorded and the program itself are also included in each example embodiment.

The storage medium is, for example, a floppy (registered trademark) disk, a hard disk, an optical disk, a magnetic disk, a magnetooptical disk, a compact disc (CD) -ROM, a magnetic tape, a nonvolatile memory, or a ROM, but is not limited to this example. The program recorded in the storage medium is not limited to a program which executes processing alone, and a program which operates on an operating system (OS) to execute processing in cooperation with other software and functions of an extension board is also included in the scope of each example embodiment.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Some or all of the above-described example embodiments may be described as the following supplementary notes, but are not limited to the following.

### <Supplementary Note>

### [Supplementary Note 1]

An information processing device including:
a receiving means configured to receive a request to acquire observation data based on a result of observing a designated range at a designated time;
a specifying means configured to specify, based on orbit information for a plurality of observation satellites, the observation satellite capable of observing the designated range on or after the designated time from among the plurality of observation satellites; and
an acquiring means configured to acquire requested observation data, the required observation data being the observation data generated by the specified observation satellite and based on a result of observing the designated range on or after the designated time.

### [Supplementary Note 2]

The information processing device according to supplementary note 1, in which
the specifying means specifies, from among the plurality of observation satellites, the observation satellite satisfying satisfies a condition regarding observation setting and being capable of observing the designated range on or after the designated time.

### [Supplementary Note 3]

The information processing device according to supplementary note 2, in which
in a case where there is the observation satellite not satisfying the condition regarding the observation setting and capable of observing the designated range on or after the designated time earlier than the specified observation satellite, the specifying means specifies the observation satellite not satisfying the condition regarding the observation setting, and
the acquiring means acquires the requested observation data generated by the specified observation satellite not satisfying the condition regarding the observation setting.

### [Supplementary Note 4]

The information processing device according to supplementary note 2 or 3, further including:
a control means configured to change the observation setting of the specified observation satellite and performs control to cause the specified observation satellite to observe the designated range with the changed observation setting.

### [Supplementary Note 5]

The information processing device according to any one of supplementary notes 1 to 4, further including:
a comparing means configured to compare a plurality of pieces of the observation data, in which
the acquiring means acquires the observation data from a plurality of the observation satellites and stores the acquired observation data in a storage device, and
the comparing means compares the requested observation data with the observation data being on a result of observing the designated range from among the observation data stored in the storage device.

### [Supplementary Note 6]

The information processing device according to any one of supplementary notes 2 to 4, further including:
a comparing means configured to compare a plurality of pieces of the observation data, in which
the acquiring means acquires the observation data from a plurality of the observation satellites and stores the acquired observation data in a storage device, and
the comparing means compares the requested observation data with the observation data being based on a result of observation by the observation satellite satisfying the condition regarding the observation setting and based on a result of observing the designated range, from among the observation data stored in the storage device.

### [Supplementary Note 7]

The information processing device according to any one of supplementary notes 1 to 6, further including:
a synthesizing means configured to synthesize a plurality of pieces of the observation data, in which
in a case where the specified observation satellite is capable of observing a part of the designated range,
the acquiring means acquires, from the specified observation satellite, the requested observation data based on a result of observing the part of the designated range on or after the designated time and the requested observation data based on a result of observing the designated range including the part of the designated range after a time when the requested observation data is observed, and
the synthesizing means combines image areas relevant to the part of the designated range included in a plurality of pieces of the acquired requested observation data.

### [Supplementary Note 8]

The information processing device according to any one of supplementary notes 1 to 6, further including:
a synthesizing means configured to synthesize a plurality of pieces of the observation data, in which
in a case where a first observation satellite which is the specified observation satellite is capable of observing a part of the designated range,
the specifying means specifies a second observation satellite being the observation satellite capable of observing the designated range including a part different from the part of the designated range and observing next to the first observation satellite,
the acquiring means acquires the requested observation data based on a result of observing the part of the designated range from the first observation satellite, and acquires the requested observation data based on a result of observing the part of the designated range from the second observation satellite, and
the synthesizing means combines an image area relevant to the part of the designated range included in the requested observation data acquired from the first observation satellite and an image area relevant to the part of the designated range included in the requested observation data acquired from the second observation satellite.

### [Supplementary Note 9]

The information processing device according to any one of supplementary notes 1 to 8, in which
the specifying means specifies the observation satellite capable of observing the designated range at a time closest to the designated time from among the plurality of observation satellites.

### [Supplementary Note 10]

An information processing method including:
receiving a request to acquire observation data based on a result of observing a designated range at a designated time;
specifying, based on orbit information for a plurality of observation satellites, the observation satellite capable of observing the designated range on or after the designated time from among the plurality of observation satellites; and
acquiring requested observation data, the required observation data being the observation data generated by the specified observation satellite and based on a result of observing the designated range on or after the designated time.

### [Supplementary Note 11]

The information processing method according to supplementary note 10, further including:
specifying, from among the plurality of observation satellites, the observation satellite satisfying a condition regarding observation setting and being capable of observing the designated range on or after the designated time.

### [Supplementary Note 12]

The information processing method according to supplementary note 11, further including:
in a case where there is the observation satellite not satisfying the condition regarding the observation setting and capable of observing the designated range on or after the designated time earlier than the specified observation satellite, specifying the observation satellite not satisfying the condition regarding the observation setting, and
acquiring the requested observation data generated by the specified observation satellite not satisfying the condition regarding the observation setting.

### [Supplementary Note 13]

The information processing method according to supplementary note 11 or 12, further including:
changing the observation setting of the specified observation satellite and performing control to cause the specified observation satellite to observe the designated range with the changed observation setting.

### [Supplementary Note 14]

The information processing method according to any one of supplementary notes 10 to 13, further including:
acquiring the observation data from a plurality of the observation satellites, and storing the acquired observation data in a storage device, and
comparing the requested observation data with the observation data being based on the result of observing the designated range from among the observation data stored in the storage device.

### [Supplementary Note 15]

The information processing method according to any one of supplementary notes 11 to 13, further including:
acquiring the observation data from a plurality of the observation satellites, and storing the acquired observation data in a storage device, and
comparing the requested observation data with the observation data being based on a result of observation by the observation satellite satisfying the condition regarding the observation setting and based on a result of observing the designated range, from among the observation data stored in the storage device.

### [Supplementary Note 16]

The information processing method according to any one of supplementary notes 10 to 15, further including:
in a case where the specified observation satellite is capable of observing a part of the designated range,
acquiring, from the specified observation satellite, the requested observation data based on a result of observing the part of the designated range on or after the designated time and the requested observation data based on a result of observing the designated range including the part of the designated range after a time when the requested observation data is observed, and
combining image areas relevant to the part of the designated range included in a plurality of pieces of the acquired requested observation data.

### [Supplementary Note 17]

The information processing method according to any one of supplementary notes 10 to 15, further including:
in a case where a first observation satellite which is the specified observation satellite is capable of observing a part of the designated range,
specifying a second observation satellite being the observation satellite capable of observing the designated range including a part different from the part of the designated range and observing next to the first observation satellite,
acquiring the requested observation data based on a result of observing the part of the designated range from the first observation satellite, and acquiring the requested observation data based on a result of observing the part of the designated range from the second observation satellite, and
combining an image area relevant to the part of the designated range included in the requested observation data acquired from the first observation satellite and an image area relevant to the part of the designated range included in the requested observation data acquired from the second observation satellite.

### [Supplementary Note 18]

The information processing method according to any one of supplementary notes 10 to 17, further including:
specifying the observation satellite capable of observing the designated range at a time closest to the designated time from among the plurality of observation satellites.

### [Supplementary Note 19]

A computer-readable storage medium having stored therein a program causing a computer to execute:
receiving a request to acquire observation data based on a result of observing a designated range at a designated time;
specifying, based on orbit information for a plurality of observation satellites, the observation satellite capable of observing the designated range on or after the designated time from among the plurality of observation satellites; and
acquiring requested observation data, the required observation data being the observation data generated by the specified observation satellite and based on a result of observing the designated range on or after the designated time.

### [Supplementary Note 20]

The computer-readable storage medium according to supplementary note 19, in which the program causes the computer to further execute:
in the specifying, specifying, from among the plurality of observation satellites, the observation satellite satisfying a condition regarding observation setting and being capable of observing the designated range on or after the designated time.

### [Supplementary Note 21]

The computer-readable storage medium according to supplementary note 20, in which the program causes the computer to further execute:
in the specifying, in a case where there is the observation satellite not satisfying the condition regarding the observation setting and capable of observing the designated range on or after the designated time earlier than the specified observation satellite, specifying the observation satellite not satisfying the condition regarding the observation setting, and
in the acquiring, acquiring the requested observation data generated by the specified observation satellite not satisfying the condition regarding the observation setting.

### [Supplementary Note 22]

The computer-readable storage medium according to supplementary note 20 or 21, in which the program causes the computer to further execute:
changing the observation setting of the specified observation satellite and performing control to cause the specified observation satellite to observe the designated range with the changed observation setting.

### [Supplementary Note 23]

The computer-readable storage medium according to any one of supplementary notes 19 to 22, in which the program causes the computer to further execute:
comparing a plurality of pieces of the observation data, in which
in the acquiring, acquiring the observation data from a plurality of the observation satellites, and storing the acquired observation data in a storage device, and
in the comparing, comparing the requested observation data with the observation data being based on the result of observing the designated range from among the observation data stored in the storage device.

### [Supplementary Note 24]

The computer-readable storage medium according to any one of supplementary notes 20 to 22, in which the program causes the computer to further execute:
comparing a plurality of pieces of the observation data, in which
in the acquiring, acquiring the observation data from a plurality of the observation satellites, and storing the acquired observation data in a storage device, and
in the comparing, comparing the requested observation data with the observation data, being based on a result of observation by the observation satellite satisfying the condition regarding the observation setting and based on a result of observing the designated range, from among the observation data stored in the storage device.

### [Supplementary Note 25]

The computer-readable storage medium according to any one of supplementary notes 19 to 24, in which the program causes the computer to further execute:
synthesizing a plurality of pieces of the observation data, in which
in a case where the specified observation satellite is capable of observing a part of the designated range,
in the acquiring, acquiring, from the specified observation satellite, the requested observation data based on a result of observing the part of the designated range on or after the designated time and the requested observation data based on a result of observing the designated range including the part of the designated range after a time when the requested observation data is observed, and
in the synthesizing, combining, image areas relevant to the part of the designated range included in a plurality of pieces of the acquired requested observation data.

### [Supplementary Note 26]

The computer-readable storage medium according to any one of supplementary notes 19 to 24, in which the program causes the computer to further execute:
synthesizing a plurality of pieces of the observation data, in which
in a case where a first observation satellite which is the specified observation satellite is capable of observing a part of the designated range,
in the specifying, specifying a second observation satellite being the observation satellite capable of observing the designated range including a part different from the part of the designated range and observing next to the first observation satellite,
in the acquiring, acquiring the requested observation data based on a result of observing the part of the designated range from the first observation satellite, and acquiring the requested observation data based on a result of observing the part of the designated range from the second observation satellite, and
in the synthesizing, combining an image area relevant to the part of the designated range included in the requested observation data acquired from the first observation satellite and an image area relevant to the part of the designated range included in the requested observation data acquired from the second observation satellite.

### [Supplementary Note 27]

The computer-readable storage medium according to any one of supplementary notes 19 to 26, in which the program causes the computer to further execute:
in the specifying, specifying the observation satellite capable of observing the designated range at a time closest to the designated time from among the plurality of observation satellites.

### [Reference signs List]

100, 101, 102, 103 information processing device
110, 510 receiving unit
120, 121, 122, 520 specifying unit
130, 131, 530 acquiring unit
140, 141 comparing unit
150 control unit
160 synthesizing unit
200, 200-1, 200-2, 200-3 observation satellite
300 storage device
400 management terminal

## Claims

1. An information processing device comprising:
a receiving means configured to receive a request to acquire observation data based on a result of observing a designated range at a designated time;
a specifying means configured to specify, based on orbit information for a plurality of observation satellites, the observation satellite capable of observing the designated range on or after the designated time from among the plurality of observation satellites; and
an acquiring means configured to acquire requested observation data, the required observation data being the observation data generated by the specified observation satellite and based on a result of observing the designated range on or after the designated time.

2. The information processing device according to claim 1, wherein the specifying means specifies, from among the plurality of observation satellites, the observation satellite satisfying a condition regarding observation setting and being capable of observing the designated range on or after the designated time.

3. The information processing device according to claim 2, wherein
in a case where there is the observation satellite not satisfying the condition regarding the observation setting and capable of observing the designated range on or after the designated time earlier than the specified observation satellite, the specifying means specifies the observation satellite not satisfying the condition regarding the observation setting, and
the acquiring means acquires the requested observation data generated by the specified observation satellite not satisfying the condition regarding the observation setting.

4. The information processing device according to claim 2 or 3, further comprising:
a control means configured to change the observation setting of the specified observation satellite and performs control to cause the specified observation satellite to observe the designated range with the changed observation setting.

5. The information processing device according to any one of claims 1 to 4, further comprising:
a comparing means configured to compare a plurality of pieces of the observation data, wherein
the acquiring means acquires the observation data from a plurality of the observation satellites and stores the acquired observation data in a storage device, and
the comparing means compares the requested observation data with the observation data being based on a result of observing the designated range from among the observation data stored in the storage device.

6. The information processing device according to any one of claims 2 to 4, further comprising:
a comparing means configured to compare a plurality of pieces of the observation data, wherein
the acquiring means acquires the observation data from a plurality of the observation satellites and stores the acquired observation data in a storage device, and
the comparing means compares the requested observation data with the observation data being based on a result of observation by the observation satellite satisfying the condition regarding the observation setting and based on a result of observing the designated range, from among the observation data stored in the storage device.

7. The information processing device according to any one of claims 1 to 6, further comprising:
a synthesizing means configured to synthesize a plurality of pieces of the observation data, wherein
in a case where the specified observation satellite is capable of observing a part of the designated range,
the acquiring means acquires, from the specified observation satellite, the requested observation data based on a result of observing the part of the designated range on or after the designated time and the requested observation data based on a result of observing the designated range including the part of the designated range after a time when the requested observation data is observed, and
the synthesizing means combines image areas relevant to the part of the designated range included in a plurality of pieces of the acquired requested observation data.

8. The information processing device according to any one of claims 1 to 6, further comprising:
a synthesizing means configured to synthesize a plurality of pieces of the observation data, wherein
in a case where a first observation satellite which is the specified observation satellite is capable of observing a part of the designated range,
the specifying means specifies a second observation satellite being the observation satellite capable of observing the designated range including a part different from the part of the designated range and observing next to the first observation satellite,
the acquiring means acquires the requested observation data based on a result of observing the part of the designated range from the first observation satellite, and acquires the requested observation data based on a result of observing the part of the designated range from the second observation satellite, and
the synthesizing means combines an image area relevant to the part of the designated range included in the requested observation data acquired from the first observation satellite and an image area relevant to the part of the designated range included in the requested observation data acquired from the second observation satellite.

9. The information processing device according to any one of claims 1 to 8, wherein
the specifying means specifies the observation satellite capable of observing the designated range at a time closest to the designated time from among the plurality of observation satellites.

10. An information processing method comprising:
receiving a request to acquire observation data based on a result of observing a designated range at a designated time;
specifying, based on orbit information for a plurality of observation satellites, the observation satellite capable of observing the designated range on or after the designated time from among the plurality of observation satellites; and
acquiring requested observation data, the required observation data being the observation data generated by the specified observation satellite and based on a result of observing the designated range on or after the designated time.

11. The information processing method according to claim 10, further comprising:
specifying, from among the plurality of observation satellites, the observation satellite satisfying a condition regarding observation setting and being capable of observing the designated range on or after the designated time.

12. The information processing method according to claim 11, further comprising:
in a case where there is the observation satellite not satisfying the condition regarding the observation setting and capable of observing the designated range on or after the designated time earlier than the specified observation satellite, specifying the observation satellite not satisfying the condition regarding the observation setting, and
acquiring the requested observation data generated by the specified observation satellite not satisfying the condition regarding the observation setting.

13. The information processing method according to claim 11 or 12, further comprising:
changing the observation setting of the specified observation satellite and performing control to cause the specified observation satellite to observe the designated range with the changed observation setting.

14. The information processing method according to any one of claims 10 to 13, further comprising:
acquiring the observation data from a plurality of the observation satellites, and storing the acquired observation data in a storage device, and
comparing the requested observation data with the observation data being based on the result of observing the designated range from among the observation data stored in the storage device.

15. The information processing method according to any one of claims 11 to 13, further comprising:
acquiring the observation data from a plurality of the observation satellites, and storing the acquired observation data in a storage device, and
comparing the requested observation data with the observation data being based on a result of observation by the observation satellite satisfying the condition regarding the observation setting and based on a result of observing the designated range, from among the observation data stored in the storage device.

16. The information processing method according to any one of claims 10 to 15, further comprising:
in a case where the specified observation satellite is capable of observing a part of the designated range,
acquiring, from the specified observation satellite, the requested observation data based on a result of observing the part of the designated range on or after the designated time and the requested observation data based on a result of observing the designated range including the part of the designated range after a time when the requested observation data is observed, and
combining image areas relevant to the part of the designated range included in a plurality of pieces of the acquired requested observation data.

17. The information processing method according to any one of claims 10 to 15, further comprising:
in a case where a first observation satellite which is the specified observation satellite is capable of observing a part of the designated range,
specifying a second observation satellite being the observation satellite capable of observing the designated range including a part different from the part of the designated range and observing next to the first observation satellite,
acquiring the requested observation data based on a result of observing the part of the designated range from the first observation satellite, and acquiring the requested observation data based on a result of observing the part of the designated range from the second observation satellite, and
combining an image area relevant to the part of the designated range included in the requested observation data acquired from the first observation satellite and an image area relevant to the part of the designated range included in the requested observation data acquired from the second observation satellite.

18. The information processing method according to any one of claims 10 to 17, further comprising:
specifying the observation satellite capable of observing the designated range at a time closest to the designated time from among the plurality of observation satellites.

19. A computer-readable storage medium having stored therein a program causing a computer to execute:
receiving a request to acquire observation data based on a result of observing a designated range at a designated time;
specifying, based on orbit information for a plurality of observation satellites, the observation satellite capable of observing the designated range on or after the designated time from among the plurality of observation satellites; and
acquiring requested observation data, the required observation data being the observation data generated by the specified observation satellite and based on a result of observing the designated range on or after the designated time.

20. The computer-readable storage medium according to claim 19, wherein the program causes the computer to further execute:
in the specifying, specifying, from among the plurality of observation satellites, the observation satellite satisfying a condition regarding observation setting and being capable of observing the designated range on or after the designated time.

21. The computer-readable storage medium according to claim 20, wherein the program causes the computer to further execute:
in the specifying, in a case where there is the observation satellite not satisfying the condition regarding the observation setting and capable of observing the designated range on or after the designated time earlier than the specified observation satellite, specifying the observation satellite not satisfying the condition regarding the observation setting, and
in the acquiring, acquiring the requested observation data generated by the specified observation satellite not satisfying the condition regarding the observation setting.

22. The computer-readable storage medium according to claim 20 or 21, wherein the program causes the computer to further execute:
changing the observation setting of the specified observation satellite and performing control to cause the specified observation satellite to observe the designated range with the changed observation setting.

23. The computer-readable storage medium according to any one of claims 19 to 22, wherein the program causes the computer to further execute:
comparing a plurality of pieces of the observation data, wherein
in the acquiring, acquiring the observation data from a plurality of the observation satellites, and storing the acquired observation data in a storage device, and
in the comparing, comparing the requested observation data with the observation data being based on the result of observing the designated range from among the observation data stored in the storage device.

24. The computer-readable storage medium according to any one of claims 20 to 22, wherein the program causes the computer to further execute:
comparing a plurality of pieces of the observation data, wherein
in the acquiring, acquiring the observation data from a plurality of the observation satellites, and storing the acquired observation data in a storage device, and
in the comparing, comparing the requested observation data with the observation data, being based on a result of observation by the observation satellite satisfying the condition regarding the observation setting and based on a result of observing the designated range, from among the observation data stored in the storage device.

25. The computer-readable storage medium according to any one of claims 19 to 24, wherein the program causes the computer to further execute:
synthesizing a plurality of pieces of the observation data, wherein
in a case where the specified observation satellite is capable of observing a part of the designated range,
in the acquiring, acquiring, from the specified observation satellite, the requested observation data based on a result of observing the part of the designated range on or after the designated time and the requested observation data based on a result of observing the designated range including the part of the designated range after a time when the requested observation data is observed, and
in the synthesizing, combining image areas relevant to the part of the designated range included in a plurality of pieces of the acquired requested observation data.

26. The computer-readable storage medium according to any one of claims 19 to 24, wherein the program causes the computer to further execute:
synthesizing a plurality of pieces of the observation data, wherein
in a case where a first observation satellite which is the specified observation satellite is capable of observing a part of the designated range,
in the specifying, specifying a second observation satellite being the observation satellite capable of observing the designated range including a part different from the part of the designated range and observing next to the first observation satellite,
in the acquiring, acquiring the requested observation data based on a result of observing the part of the designated range from the first observation satellite, and acquiring the requested observation data based on a result of observing the part of the designated range from the second observation satellite, and
in the synthesizing, combining an image area relevant to the part of the designated range included in the requested observation data acquired from the first observation satellite and an image area relevant to the part of the designated range included in the requested observation data acquired from the second observation satellite.

27. The computer-readable storage medium according to any one of claims 19 to 26, wherein the program causes the computer to further execute:
in the specifying, specifying the observation satellite capable of observing the designated range at a time closest to the designated time from among the plurality of observation satellites.
